# EUROPEAN PATENT APPLICATION

(11) **EP 4 428 363 A1**
(43) Date of publication of application: **11.09.2024**
(21) Application number: 23020119.6
(22) Date of filing: 10.03.2023
(51) Int. Cl.: F03D 3/02, F03D 3/06, F03D 15/00

(54) **WIND ENERGY CONVERTER**

(71) Applicant: Podhola, Kamil, 46311 Liberec 30 (CZ)
(72) Inventor: Podhola, Kamil, 46311 Liberec 30 (CZ)

(57) **Abstract**

The invention relates to a wind energy converter (WEC) comprising one or more epicyclic blade rotors having one or more blades and a gear mean, and rotatably supported by a carrier. The gear mean can mesh with a circumferential drive mean and/or with a sun drive mean. The wind energy converter can be characterised in that the gear mean drive an electricity generatig mean. The WEC can comprise a ring gear, a belt and/or chain drive and it can be vertically mounted. The WEC can be fabricated of different materials, it can be provided in an array and couplable or coupled with mechano- and/or electrocomponents. The invention further relates to a wind energy providing method using the proposed wind energy conveter.

## Description

### Technical Field

The invention relates to a wind energy converter.

### Background Art

Wind turbines can be found in many configurations, shapes and sizes, ranging from the relatively simple to the most sophisticated used in onshore and/or offshore installations, arrays, farms, etc. Wind turbines are machines that convert kinetic energy from the wind into electricity. The main parts are rotor with blades rotatably mounted to a shaft oriented horizontally or verticaly.

### Disclosure of Invention

The object of the present invention is to propose a wind energy converter comprising one or more epicyclic blade rotors comprising one or more blades and a gear mean, the epicyclic blade rotors rotatably supported by a carrier; a circumferential drive mean, wherein the gear mean can mesh with said circumferential drive mean and/or a sun drive mean, wherein said gear mean can mesh with the sun drive mean, the wind energy converter characterised in that the gear mean can drive an electricity generatig mean.

It is yet another object to provide the wind energy converter with the circumferential drive mean being a ring gear and/or a belt drive and/or a chain drive.

It is yet another object to provide the wind energy converter vertically mounted.

It is yet another object to provide the wind energy converter with components fabricated of defined materials.

It is yet another object to provide the wind energy converter provided in an array.

It is yet another object to provide the wind energy converter couplable or coupled with a mechanocomponent and/or an electrocomponent.

Another object of the present invention is to propose a method for providing a wind energy using a wind energy converter comprising one or more epicyclic blade rotors comprising one or more blades and a gear mean, the epicyclic blade rotors rotatably supported by a carrier and further comprising a circumferential drive mean, wherein the gear mean meshes with the circumferential drive mean and/or further comprising a sun drive mean, wherein the gear mean meshes with said sun drive mean, and wherein the gear mean can drive an electricity generatig mean, the method characterised in that it comprises the steps of:
- providing a torque by means of the epicyclic blade rotors to the gear mean;
- distribuing the torque to the circumferential drive mean and/or to the carrier and/or to the sun drive mean;
- driving one or more electricity generating means by means of thetorque.

It is yet another object to provide the method for providing a wind energy using the wind energy converter wherein the gear mean and/or the carrier and/or the cirumferential drive mean and/or the sun drive mean torque can be controlled.

It is yet another object to provide the method for providing a wind energy using the wind energy converter with a defined type of the control.

In a first aspect, the invention discloses a wind energy converter.

In a second aspect, the invention discloses a wind energy providing method using the proposed wind energy conveter.

### Brief Description of Drawings

The invention will now be described by way of example. Only essential elements of the invention are schematically shown and not to scale nor in proportions to facilitate immediate understanding, emphasis being placed upon illustrating the principles of the invention.

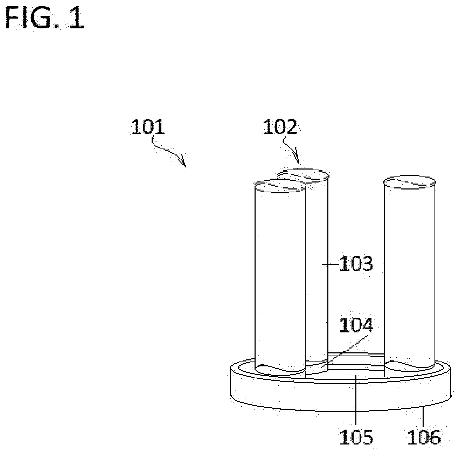

FIG. 1 is a perspective illustration of a wind energy converter according to the present invention.

### Best Mode for Carrying Out the Invention

The following detailed description shows the best contemplated modes of exemplary embodiments. The description is made for the purpose of illustrating the general principles of the invention, and in such a detail that a skilled person in the art can recognise the advantages of the invention, and can be able to make and use the invention. The objects and advantages of this invention may be realized and obtained as pointed out in the appended claims. Additional advantages may be learned by practice of the invention. The detailed description is not intended to limit the principle of the presented invention, but only to show the possibilities of it and to explain the meaning and the sense of the terms used in the appended claims. The description and the detailed description are exemplary and explanatory only.

The terms used in the claims and the specifications shall refer to their synonyms as well.

As used in the claims and the specification, the singular forms are intended to include the plural forms as well and vice versa.

As used in the claims and the specification, the terms circumferential drive mean, the gear mean, the sun gear, and the like shall refer to cogged wheels, sprockets, bevel gears, etc., but also to friction means such as rubber rollers, cones, etc.

As used in the claims and the specification, the term "to mesh" shall also refer to meshing gears, a sprocket and a chain, a pulley and a belt, a mesh by friction, or other analogical connections which can be mechanical, magnetic, electromagnetic, pneumatic, hydraulic, combined, etc.

Various types of gear profiles [e.g. with involute, cycloidal, helical, herringbone, bevel, etc., gear teeth] can be used.

As used in the claims and the specification, the term "said gear mean can drive an electricity generating mean" shall refer to direct and/or indirect drive [e.g. by means of a carrier, a circumferential drive mean and/or a sun drive mean; by means of any mechanical, electromagnetic, hydraulic, pneumatic connection, etc.].

As used in the claims and the specification, the term "gear device" shall refer to gears, gear boxes, planetary gears, reduction gear sets, differential gears, variators, etc. Various reduction ratios can be used.

As used in the claims and the specification, the term "transmission mean" shall refer to belts, chains, cardans, cogwheels, sprockets, shafts, continuously variable transmissions, etc.

As used in the claims and the specification, the term "electricity generator" shall refer to AC generators, DC generators, motor generators, homopolar generators (disc types, drum types, combined types), etc. The term shall refer to constructions such as permanent magnets and/or electromagnets (concentrically) disposed around the rotor base or other rotating components to generate electricity, the term shall refer to axial or radial flux generators, etc.

As used in the claims and the specification, the term "processor" shall refer to programmable systems including microcontrollers, application specific integrated circuits (ASIC), reduced instruction set circuits (RISC), programmable logic circuits (PLC), system executing supervisory, Supervisoriy Control and Data Acquisition (SCADA) programs, etc.

The term "to couple" and derivatives shall refer to a direct or indirect connection via another device and/or connection, such a connection can be mechanical, hydraulical, electrical, electronical, electromagnetical, pneumatical, communication, functional, etc. The connection can be temporary, permantent, detachably attachable, scalable, slotable. Any additional systems may be coupled to the elements, components, etc. and to the system of the invention.

The terms "to comprise", "to include", "to contain", "to provide" and derivatives specify the presence of an element, but do not preclude the presence or addition of one or more other elements or groups and combinations thereof.

The term "consisting of" characterises a Markush group which is by nature closed. Single members of the group are alternatively useable for the purpose of the invention. Therefore, a singular if used in the Markush group would indicate only one member of the group to be used. For that reason are the countable members listed in the plural. That means together with qualifying language after the group "or combinations thereof that only one member of the Markush group can be chosen or any combination of the listed members in any numbers. In other words, although elements in the Markush groups may be described in the plural, the singular is contemplated as well. Furthermore, the phrase "at least one" preceding the Markush groups is to be interpreted that the group does not exclude one or more additional elements preceded by the phrase.

The invention will be described in reference to the accompanying drawings.

FIG. 1 is a perspective illustration of a wind energy converter (101) comprising three epicyclic blade rotors (102) [which can have different blade forms, shapes, numbers, positions, etc.] comprising one or more blades (103) and a gear mean (104) [which can or follow the tooth number correlation formula or other priciples violating this formula can be used; different numbers of teeth can be used as well, low frequency of tooth reconnection principles can be taken into account, etc.].

The epicyclic blade rotors (102) can be optionally equally circumferentially spaced within the space index and rotatably supported by a carrier (105) [which can have any shape, form, design and which can be fixedly and/or rotatably, tiltably, axially slidably, flexibly, etc., mounted and which can be provided with various types of couplings to the gear mean (104) /inclusive of flexible coupling pins, (planet) pins with improved load distribution features, carriers with flex portions of various shapes and forms, double joint system pins, self-aligning systems, systems combining lower and high strength materials, systems responsive to tangential and/or radial forces directed at the planet gears, etc./]; a circumferential drive mean (106) [which can be a ring gear, a friction ring, but also a belt, a chain, etc., in which later case the shape would correspond to the position and layout of the blade rotors (102); others assemblies having different layouts than the shown three rotor assembly posed in triangle are contemplated as well]. The epicyclic gear mean (104) can mesh with the circumferential drive mean (106). The wind turbine (101) can be characterised in that the gear mean (104) can drive an electricity generatig mean [e.g. an electricity generator can be coupled directly to the gear mean (104) or indirectly via another gear, the carrier (105), the circumferential drive mean (106), a sun drive mean (not shown), a variable ratio gearing, a shaft, a belt, a right angle drive, a hydrostatic pump and motor, etc.; pumps or other energy conversion means can be coupled in place of the electricity generator].

The wind energy converter (101) can comprise the sun drive mean [e.g. a sun gear which can be coupled with a driving shaft and the electricity generator]. The circumferential drive mean (106) can be optionally the belt, the chain, etc. (not shown) which can drive the electricity generator directly or by means of pulleys, shafts, sprockets, gears, etc.

The wind energy converter (101) can be preferably vertically mounted (preferably above sea level or another body of water).

Any of the circumferential mean (106), the carrier (105), the gear mean (104) and/or the sun drive mean can be designed to function as a flywheel. A variable mass flywheel can be provided [which can be mechanical, hydraulic, electromagnetic, etc.].

Any kind of a clutch mechanism (not shown) can selectivelly connect the flywheel or another component.

The components of the proposed system can be fabricated of various materials known in the art [e.g. metals, metal alloys, superalloys, polymers, carbon materials /inclusive of carbon-carbon composites/, polyester materials, epoxy materials, ceramic, glass, fiber materials, wood materials, wood compounds, nanomaterials, binders, heat resistant materials, water resistant materials, solvent resistant materials, chemically resistant materials, sandwiched materials, layered materials, radiation resistant materials, painted materials /inclusive of UV protectant coatings/, galvanized materials].

The wind energy converter (101) can be provided in an array (not shown) [e.g. wind farms of various patterns not to obtrue wind access to another wind converter, etc.].

The wind energy converter (101) can be coupled with different mechanocomponents [e.g. stay vanes, guide vanes, fixed blades, wind directing devices /all these components can improve functionality and efficacity of the wind energy harvesting/, blades at least partially covering devices /e.g. Savonius type rotor can have an improved efficiency if it can be partially covered so that the drag can be reduced, various control means can be employed to orient the covering device with respect to the wind direction/, gear devices coupled with the epicyclic gear (104); brakes /which can be designed to stop the spinning main shaft in case of high winds, etc./, clutches, yaw drives /which can optimally position the converter assembly e.g. so that the blade rotors (102) do not be in a wind shadow or a turbulent outflow from another blade rotor (102)/, transmission means and/or thermal management systems /which can thermally manage any component of the system including electrocomponents/, torque converters, (flexible) joints, dampers, counterweights, foundations, pumps, lifts, conveyers /the connection can be direct or indirect, electromagnetic, mechanical, pneumatic, hydraulic, etc./, potential energy devices /which can pump water to a reservoir from a lower elevation to a higher elevation during a low electricity demand period to store the energy (and water) and to improve efectiveness of wind energy harvesting, etc.; hybrid energy harvesters can thus be created; the reservoirs can be placed in a proximity of the tower, under the tower, on the tower //which can eliminate vibrations during an earthquaqe// etc./].

The wind energy converter (101) can be coupled with different electrocomponents to harvest the wind energy [e.g. anemometers, sensors, targets, actuators, amplifiers, coils, variable resistance coils /which can be individually turned on or off depending on wind conditions; and/or which can brake the rotor/, resonators, rectifiers, filters, inverters, converters /e.g. the current can be first converted by a rectifier to DC and then back to AC and conveyed to electrical machines, a power grid, etc./, transformers /e.g. having cored or coreless coils; being wound in (principally four) different patterns/, voltage regulators, power factor corrections, compensations, power electronics, chargers, controllers, processors, inductors, capacitors, resistors, diodes, varactors, switches, conductors, rechargeable batteries, rechargeable power sources, source management systems, loads, power transfer interfaces, power cables, input devices, electricity generators, electric motors, arrays of solar cells, hydrogen power units providing fuel cells, wind energy to electric energy converters, wave energy to electric energy converters, tidal energy to electric energy converters, water currents energy to electric energy converters, thermal energy to electric energy converters, flux alternators /e.g. axial or radial flux alternators using the variable resistance coils/, magnetic levitation devices /any preferably rotating component of the system can be magnetically levitated /e.g. by means of oposed polarity levitating magnets which can be concentrically disposed, ring shaped, etc./].

Controllers may provide proportinal and integral (PI) control in some embodiments, in others a differential term may be added (PID) control, etc.; the controller may be analog or digital; digital types can have an algorithm that correlates the power level input signals from a generator, local wind speed and direction signals from a local anemometer, a thermometer, a hygrometer, position signals from a blade sensor and other signal sources, determining optimal settings and sequences of various actuators driving the system components, etc.

The employed algorithm may also have the capability to record the operation history to make predictions for future system settings; various control methods can be employed, e.g. a variable speed at fixed rotor parameters, a variable rotor setting to maintain the revolutions per minute of the rotor, etc.; this provides the wind turbine system capable of producing optimum energy output even with varying wind conditions and speeds; manual operating and control of turbine components are contemplated as well.

Microprocessors can be in communication with the actuators and weather sensors; the computer memory may store a control rule being constantly compared with detected weather conditions; the control rule may further predict wind speeds, conditions and dangerour gradients, turbulences, danger of icing, etc., to prevent the system from the conditions exceeding its operating limits; the weather sensor(s) may be located in a sufficient distance from the wind turbine.

Control algorithms can be based upon prevailing wind conditions toghether with active azimuthal control /e.g. for each azimuth or zone can be set a different control program maximizing the windflow for the turbine and minimizing the danger of the damage to its components; such the control program can take into account the parameters in the whole array of turbines, in the group of turbines, adjacent turbines, mutually influencing turbines, etc ].

Control algorithms can be based upon retrieving external and/or internal system data; their evaluation; and deciding upon where the energy should be sent whether to the grid or a rechargeable power source. The grid can be a smart grid with smart components [e.g. smart substations] and the controller can evaluate the parameters obtained from the grid to choose the appropriate control settings within the wind electricity converter and can decide where and how much electricity wil be produced and distributed. The controller can further evaluate the status of a local (or distant) storage capacity, etc. Agregators's systems can be used especially during peak and off-peak hours, local outages, for evaluating market prices, etc.

Controller can determine a number of activated coils for electricity generation, braking functions, etc. [e.g. depending on inner and outer system sensors' signals].

Controllers may receive feedback from various operating condition sensors [e.g. rotational speed, bearing temperature, electrical potential and current, information from actuators about executed commands, etc.].

Communication interfaces [e.g. electronic, human-machine, etc.] for local and/or distant wired and/or wireless can be further provided to communicate with the controllers and/or operators, central systems, cloud/fog/edge communication is contemplated as well. The controllers may report the operational state of the system, the outages, the state of charge of a local rechargeable power source, etc., locally and/or distantly via telephone techniques, satellite connections, wired connections, etc.

Wind turbines can be arrayed in wind farms wherein a single control system may be utilized. The wind turbines can be positioned to reduce or to minimize a wake effect. Optimalization programs for wind turbines in arrays can be provided adjusting wind turbines' parameters to produce an acceptable amount of turbulence induced so that (an)other (adjacent) wind turbine(s) in array can still reach an optimum power production (similarly in the case of (a) non-operational unit(s) in the array). Typically (a) downstream turbine(s) can monitor an operational status of (an) upstream turbine(s) [e.g. a rotational speed of rotor, a power output, turbine settings, the time of operationality or non-operationality, a time-out response, meteorological mast data, etc.]. By these programs various operational parameters can be set [adjusting the power production, the rotor rotation, the retractable blades settings, the nacelle positioning, etc.]. Turbine operational centers (farm centers) can be provided.

All the mechano- and electrocomponents are well known in the art and connecting with them represents known constructions which does not need to be explicitly tought.

### Common requirements

The wind energy converter can work in two different modes A) an epicyclic rotating mode [i.e. the blade rotors can rotate along their respective axes of rotation and revolve round a common center] and B) a stationary mode [i.e. the blade rotors can rotate only along their respective axes of rotation but otherwise remain stationary and these are the circumferential drive mean and/or the sun drive mean which rotationally (eventually translationally in case of driving belts, chains, etc.) transfer the motion.

The blades can be rotatably (pivotally) mounted in various ways [e.g. by composite bearings, ball bearings, roller bearings, tapered roller bearings, low friction sealed bearings, sliding bearings comprising ceramic sleeves and friction surfaces, rollers, central pylons /rods, shafts, etc., which can be segmented/ with circumferential one or more bearing, bearing zones, etc.]. For example, a central tower with positioned upper and lower bearings rotatably supporting the hub (and/or a blade support, a blade ring, etc) of the blades can be used as well.

Planetary transmissions having three movable shafts are commonly referred to as the differentials which obey a rule that at a constant rotation speed of one shaft the rotating speeds of other shafts depend on the applied torque (i.e. the number of revolutions increasing of one shaft reduces the rotation speed of the other shaft).

The reducing the wind speed generally causes a lower wind energy imposed to the turbine blades and slowing down the rotation. The proposed system can control the epicyclic gear mean, the sun drive mean, the circumferential drive mean and/or the carrier by means of torque control. If the wind speed decreases under a certain level, the generator can automatically switch to an electric motor mode powered from the central power supply or from a rechargeable power source. Generation from one source is stopped or diminued to be provided from another source or maximized. This can occur at lower wind speeds [e.g. 20-25% of the nominal value.].

The epicyclic gear mean on the carrier can transmit high torques within relatively small dimensions and can function as a step-up or step-down gear transmitting the torque to the sun drive mean, the circumferential drive mean which can further transmit the torque (until an electricity generator is reached; the carrier and/or the epicyclic gear mean and/or the sun gear mean can drive the generator(s) as well).

Any of the circumferential drive mean, the gear mean and/or the sun drive mean can provide more gears [and/or more ratios; inclusive of providing (variable) gear ratios by means of oposed cones]; various ratios can thus be attained; various types of cogged wheels, friction connections, electromagnetic couplings, etc., can be used.

Each generator can function as a motor generator, a brake (additional brakes can be provided as well).

Other step-up (step-down) gears can be added to reach an operation speed of the generator(s).

The generators(s) can be advantageously coupled to the particular components so that the generator(s) can remain static which can reduce vibrations, noises, costs, problems with twisted power cables, etc. Converter's own generator can be used as a motor during startup. DC generators typically can produce electricity at both low and high-speed rotations. Various types of generators can be coupled to various rotational components of the proposed converter. The generators can be typically connected via either vertical or horizontal shaft.

Electricity generators can for example have an output of electrical power connected to the electrical grid through an electrical engagement system which can take the generator off line when the rotor stopped or not generating adequate power and which can synchronize the both systems. A control system can be provided to choose which generator will be activated to generate electricity and/or to brake. The electricity producing system can be coupled with a rechargeable power source system.

A sprocket transmission, a belt drive, a chain drive, a variator [e.g. using conical opposed wheels, substantially perpendicular wheel and drum, etc.], etc., can be used as the system's components and in the proposed method to drive the generator(s) shaft(s) with various types of couplings [e.g. male and female shaft coupling, homokinetic joints, etc.].

An electromagnetic clutch, flexible connections [e.g. between the carrier flange(s) and a torque transfer part, ], (oposed) cones connections [between any of the rotating or moving components], etc., can be installed to compensate for misalignments, tilting, axial displacement, flexural deformations, twisting, bending, etc.

Flexible materials such as rubber, natural rubber, elastomers, polymers, etc., may be used in the proposed system.

The blades can comprise shell structures made of a composite material [e.g. a resing matrix reinforced with fibres; e.g. polyester, vinylester or epoxy thermosetting resin, or thermoplastic resin such as nylon, PVC, ABS, polypropylene or polyethylene; or resin can be cyclic PBT or PET; fibres can be of glass, carbon, carbon-carbon, metal, basalt, etc.; reinforced resin with a polycarbonate clear coat; core can be hollow with ribs and core materials of sandwich structures can be foamed polymer or balsawood, etc.; plurality of sections and/or layers can be provided]. Generally lightweight material such as aluminium, aluminium alloys can be used in construction of turbine components.

Deformable parts of the blades can be of polymers [e.g. rubber, natural rubber, polypropylene, polyethylene, nylon, elastomers, etc.]. For some embodiments a lightweight material like for modern flexible sails such as Dacron, Tetoron, Terylene, Trevira, Diolen, Kevlar, Twaron, or other fiber and/or foil type materials inclusive of metallic foils, composite materials, reinforced foils /e.g. fiberglass aluminium foil/, etc.; can be used.

The setting of the system components [e.g. the rotational speed of the components, the setting of the blade rotors, etc.] can be configurated to maintain a stabile rotation speed of the electricity generator.

The system can be able to transfer heavy loads; supporting bearings, rollers, etc., can be provided in the system.

The components can have calculated optimum dimensions according to specific applications. The precision of the fabrication of individual components and of their installation can determine the bearing capacity, vibrations, the noise level, etc., of the system.

Supporting bearings, shafts, casings, housings, sensors, (self-) lubrication systems comprising oil coolers, oil pumps, etc., can be provided. Various lubrication systems can be used inclusive of solid lubricants /e.g. based on metal dichalcogenides/ in combinations with a ceramic sleeve, convetional greases, liquid lubricants, etc.

The turbine blades can be drag-type, lift-type and combined drag- and lift-type.

The drag-type typically include cups, buckets, paddles, etc., Savonius type of two or more scoops (semi-cylindrical blades) [which can be horizontally or vertically oriented, which can be alternatively provided in plurality of cylindrical segments such as triangularly three-dimensionally shaped foils (sails, vanes) resembling triangular sails with linear and curvilinear edges which works in the known five-step sequence; these turbines can be striken from all directions simultaneously /e.g. in turbulent areas, atop buildings, etc./ and can spin faster than the wind].

The lift-type typically can use the lift produced by an airfoil [e.g. C-shaped (typically two or three) blades as presented by Georges Darreius or cylindrical drum (squirrel cage) "Giromill" type /with fixed pitch or variable pitch blades, e.g. rotatably mounted, articulating and continuously adjusting an angle of attack, blades having adjustable, controllable airflow guiding devices, flaps, leading or trailing edges, etc., wherein a slight variation in pitch angle may have variable effects on the final performance; self positioning ("free flying") airfoils maximally responsive to the true relative wind have been proposed/; contra-rotating mirror arranged cantilevered airfoil arms; a prolate spheroid lift type turbine with elongated S-curves vanes which can be responsible to either wind shear in a vertical axis configuration (or wind flow in a horizontal axis configuration), combined vertical turbines providing fixed stator blades accelerating, guiding, etc., the fluid flow and rotatable stator blades, etc.].

The Savonius type, lift-type, etc., turbines are typically not self starting [unles provided with a wind directing device, guide vanes, a blades at least partially covering device, etc.], electric generator can be used as a starting motor.

The vertical turbines can be provided with turbulence reducing caps.

The vertical turbines can be advantageously magnetically levitated which can reduce losses due to frictions in bearings.

The systems may be designed to switch between the lift- and drag- or combined modes depending on wind velocity and force, or other conditions.

The Savonius type wind turbine can be effectively operated at a relatively low wind speed when generating a large torque. The Darreius type can be effectively operated at a relatively high wind speed and to increase the rotational speed beyond the wind speed and to obtain larger rotational energy. Both types can operate regardless the wind direction. Both types can be integrated in one device and combined with blades for vertical currents [e.g. propeller type horizontal blades, oblique blades, inclined blades improving startability, foldable blades, three-dimensionally curved blades, etc.].

The turbine systems can be designed as reaction turbines, impulsion turbines, hybrid turbines.

Contra-rotating blade rotors can have the advantage of doubling the effective speed of the generator and thus increasing the output for the same wind speed. The contra-rotation tends to minimize vibration forces, a gyroscopic load, effectively shortens the blades' length.

The proposed system can be used for coupling horizontal axis windturbines, slanted axis windturbirnes, etc., as well.

The proposed system can be provided as an anchored and/or floating offshore system, in urban areas, etc.

The vertical wind turbines may (as well as the horizontal wind turbines) be designed accordingly to Betz's Theory of maximum efficiency saying, that an ideal turbine system should lower the speed of the wind by a factor of only about one-third and create the minimum amount of interference to the passing wind stream. Betz does not take into account the mass-energy exchange with ambient air turbine air flow; i.e. the assumption that the action of the air flow on the turbine leads to air ejection caused by air streams flowing round the turbine and resulting in reducing air pressure downstream, i.e. the downstream rotors can be influenced by upstream rotors.

Airfoils can be constructed in a narrow aspect ratio and allowed to rotate faster on a larger rotor radius to sweep a large surface area at the highest speed possible using a minimum number of airfoils. Drag-based VAWTs not harnessing crosswind lift typically were not able to meet at least Betz's criteria in efficiency.

The wind turbines designs are typically scalable in size and number of blades (airfoils) or other components. They can be configured for smaller radius (and smaller torque) and higher RPM or the contrary.

The vertical axis turbines can be constructed to rotate in winds from a single direction, multiple directions including winds blowing from directly above, and cyclonic winds. The vertical axis turbines can harness wind from a full 360 (280) degrees or less [e.g. 90, a substantially 180 degrees a Savonius type turbine with partially covered blades to reduce induced drag, or using vanes with drag reducing weathervaning functions /e.g. using stop components, elastic components, spring components, weight components, centrifugal force compensating components, etc.].

The contour of the lift-type blades can comprise a pressure side (windward, upwind side) and a suction (leeward, downwind) side, a leading edge and a trailing edge [which can be between 1 nad 70% of the chord length] with a chord extending in between. Strong depression on the back side of the retractable blade profile can be produced when air is flowing through. The profiled contour can generate a lift when being impacted by an incident airflow. [The amount of lift generated on the blade can mainly depend on a speed of the wind, a blade lift coeficient, a blade planform area, an air density of the wind.] The root region can optionally be substantially circular or elliptical and the airfoil region generating lift can be disposed away from the hub after a transition region gradually changing the profile. The transitional region can extend along a defined longitudinal extent.

The turbine blades can be typically designed by firstly designing the outer shape and the aerodynamic perfomance of the blade to obtain the target loading and the target axial induction. The aerodynamic shapes can be complex as well as the manufacturing process.

The blades can be designed to prevent stall problems [e.g. by providing turbulence generating strips, etc.]. Stall control methods can be further employed to prevent premature stall on the blades leading to unnecessary noise and power loss. The turbine blades can be provided (eventually retrofitted) with ribs, vortex generators, serrated trailing edge pannels, flaps, slats, slots, spoilers, cuffs, flow guiding devices, flow altering devices adjusting lift and inflow propertites, lift generating apparatuses defining airflow channels and leading and/or trailing edges of blades, leadig/trailing edge extensions, etc.; these constructions can be coupled in various ways [e.g. bonded, bolted, riveted, coupled by means of joints, slidably coupled, movably coupled, rotatably coupled, detachably coupled, etc.].

Various fabrication techniques can be used such as pultrusion, extrusion, (pre-) bending, moulding, drilling, milling, cutting, bonding, etc. Blades can be optimised so as a power coefficient of the wind turbine blade is maximum for a design wind speed and a design rotor speed.

The blades can thus have various profiles [e.g. substantially arcuate, airfoil-shaped inclusive of NACA airfoils, DU airfoils, MEL airfoils, flatback airfoils, flatback airfoils with extension portions, covering members variously shaped, airfoils with a trailing edge thickness ratio more than 5%, blades with a blade thickness between 35-50%, airfoils with deformable trailing edge sections, dummy edge sections, etc.], circular cross-sectional, V-shaped, curvilinear, combined, spring-loaded airfoils, etc.; and the profiles can have a rigid central part, be of sandwiched constructions, hollow constructions, shell constructions, layered constructions, constructions with cavities, semi-rigid materials, etc.

Typically, the wind energy is available at the minimum speed of 7-8 km/h and the maxiumum speed of 60 km/h. The proposed design can make it possible to broaden the scope of wind speed to be converted into electricity. The blade rotors can advantageously rotate at higher speeds, thus harnessing more wind energy [which doubles when the speed doubles.].

HAWTs' airfoils can typically achieve rotor rip speeds being faster than the wind speed. VAWTs on the contrary typically have not a top rotor speed greater than the wind speed because the mas of the rotor. It is important, that the VAWT be a good torque producer which can be achieved by the proposed system.

Electric equipment can be typically very heavy, when placed on the top of the tower, it can require a heavy and expensive construction of the tower. The main advantage of vertical-axis wind turbine (VAWT) types are in the placing of the electric equipment at the bottom of the wind machine. VAWTs represent currently less than 10% in comparison with the horizontal-axis wind turbine (HAWT) types in the world wind energy production. The proposed design can improve the ratio in favor of VAWTs.

Low-frequency oscillations at the HAWTs can be conventionally eliminated by increasing the number of blades or increasing the rotation speed of the wind turbine [seeing that unperceivable infrasound within the range from 16 Hz to 0.001 Hz (or 0 to 20 Hz range) can have dangerous effects on human especially brain functions]. The low-frequency pulsations arise at the HAWTs at the moments of a blade passing past the tower. The proposed WEC can advantageously provide an alternative without these low-frequency pulsations.

Similarly gearboxes for contemporary wind turbines are very big, heavy and expensive. In the HAWTs, the power transmission equipment and energy conversion devices are typically mounted atop the tower which becomes structurally robust and costly, must resist oscillation and fatigue from pressure pulsations. Maintenance of at the top positioned structures can be complex. Today's VAWTs typically does not provide an yaw mechanism. The proposed design proposes a relatively light-weight gear device [especially when using a belt] which does not need to be lifted on the top of the tower.

HAWTs can suffer from large differential forces exerced on the blades and caused from the wind gradients. This imbalance must be taken into the account in designing the system. In VAWTs the wind gradient influences are less significant.

The pitch control assembly as known from HAWTs, which can function as a control element, a starting element, a braking element and also as a protection against heavy winds, can be similarly used in VAWTs.

The couplings can be coaxial, direct, indirect, flexible, etc. The couplings can be controlled by control boxes, processing units with memory, manually, hydraulically, pneumatically, electromagnetically, etc.

The proposed converter can provide for shorter blades. The tall towers and blades up to 65 meters long are difficult to transport on shore and off shore. Longer blades are also subjects to high vibrations during wind gusts. Lengths of the blades can nevertheless be relatively short or can be 30 (99 feet) or more meters (e.g. 120) (394 ft).

Another advantage of VAWTs is that large technologies are not supported by the nacelle but placed at the bottom of the wind energy converter thus economizing fabrication and installation costs. VAWTs have better responsivity to wind changes than HAWTs [e.g. sudden wind shears, wind shifts, etc.] which are more sensitive to changeable and turbulent winds. Wind speeds close to the ground are very low and turbulent due to boundary layer effects; this situation is better over the water surfaces such as sea level making the installation of the proposed converter practically suitable.

The proposed system may work with or without stabilizing guy wires.

The turbine blades can be provided (eventually retrofitted) with ribs, vortex generators, serrated trailing edge pannels, flaps, slats, slots, spoilers, cuffs, flow guiding devices, pulsating flow jets, tangential or normal blowers, boundary layer energisers or reenergisers, flow altering devices adjusting lift and inflow propertites, lift generating apparatuses defining airflow channels and leading and/or trailing edges of blades, etc., these constructions can be coupled with various ways [e.g. bonded, bolted, riveted, coupled by means of joints, slidably coupled, movably coupled, rotatably coupled, etc.].

Control methods can be employed avoiding a complete shut down [e.g. using predefined sector control strategies based on expected wind loads and nominal wind loads /design loads which may be based on measured data concerning wind speeds, directions, turbulences, etc.].

Combining algorithms can be provided making choice of various control possibilities and system setting combinations [e.g. combinations of a power output and a rotational speed with different loads] to be selected to achieve an optimal setting including optimal power production control, with safety and design requirements on the individual components of the system and the overall loading of the wind turbine. The wind turbines typically operate under partial loads conditions until the rated wind speed is reached when the nominal generator power is reached. The turbines can be controlled to produce more or less than nominal power in both the full load and the part load regions.

Wind turbines commonly can be arrayed in wind farms wherein a single control system may be utilized. The wind turbines can be positioned to reduce or to minimize a wake effect.

Optimalization programs for wind turbines in arrays can be provided adjusting wind turbines' parameters to produce an acceptable amount of turbulence induced so that (an)other (adjacent) wind turbine(s) in array can still reach an optimum power production (similarly in the case of (a) non-operational unit(s) in the array). Similarly within one wind production unit accordingly to the present invention a control program and system can be provided for optimalization settings of a turbulent wake zone produced from adjacent blade rotors.

No limitations are intended others than as described in the claims. The present invention is not limited to the described exemplary embodiments. It should be noted that various modifications of the outer turbine can be made without departing from the scope of the invention as defined by the claims.

Elements, integers or components having known equivalents thereof are herein incorporated as if individually set forth.

The material components, materials, chemical substances and compounds, etc., desribed in this specification reflect the state of knowledge at the time of the filling of this application and may be developed in the future.

### Industrial Applicability

The present invention can be used for a large number of applications to exchange kinetic energy with a working fluid or gaz mainly to produce electric energy. The invention proposes a turbine with a presumed high efficiency, a turbine with a relatively small diameter for small applications.

The turbine can be coupled with power plants, vehicles, vessels, models, toys, etc.

The proposed wind energy converter can be used to propel water vessels and land vehicles using the Magnus effect.

The proposed system can provide for a less complicated design having fewer machine components, and therefore lower maintenance costs with a higher level of reliability. This can be specially important for offshore facilities.

The fluid turbines can be provided in a flow of air or water. The proposed design can be for example used in tidal flow, etc.

## Claims

1. A wind energy converter, comprising: one or more epicyclic blade rotors comprising one or more blades and a gear mean, said epicyclic blade rotors rotatably supported by a carrier; a circumferential drive mean, wherein said gear mean can mesh with said circumferential drive mean and/or a sun drive mean, wherein said gear mean can mesh with said sun drive mean, said wind energy converter **characterised in that** said gear mean can drive an electricity generatig mean.

2. The wind energy converter according to claim 1, wherein said circumferential drive mean is a ring gear.

3. The wind energy converter according to claim 1, wherein said circumferential drive mean is a belt and/or chain drive.

4. The wind energy converter according to claim 1, vertically mounted.

5. The wind energy converter according to claim 1, further comprising a wind guiding component

6. The wind energy converter according to claim 1, wherein at least one component is fabricated of a material, wherein at least one said material is selected from the group consisting of metals, metal alloys, superalloys, polymers, carbon materials, polyester materials, epoxy materials, ceramic, glass, fiber materials, wood materials, wood compounds, nanomaterials, binders, heat resistant materials, water resistant materials, solvent resistant materials, chemically resistant materials, sandwiched materials, layered materials, radiation resistant materials, painted materials, galvanized materials, or combinations thereof.

7. The wind energy converter according to claim 1, provided in an array.

8. The wind energy converter according to claim 1, wherein said wind energy converter is couplable or coupled with a mechanocomponent, wherein at least one said mechanocomponent is selected from the group consisting of stay vanes, guide vanes, fixed blades, wind directing devices, blades at least partially covering devices, gear devices, brakes, clutches, yaw drives, transmission means, thermal management systems, torque converters, joints, dampers, counterweights, foundations, pumps, valves, vanes, lifts, conveyers, potential energy devices, or combinations thereof.

9. The wind energy converter according to claim 1, wherein said wind energy converter is couplable or coupled with an electrocomponent, wherein at least one said electrocomponent is selected from the group consisting of anemometers, sensors, targets, actuators, amplifiers, coils, variable resistance coils, resonators, rectifiers, filters, inverters, converters, transformers, voltage regulators, power factor corrections, compensations, power electronics, chargers, controllers, processors, inductors, capacitors, resistors, diodes, varactors, switches, conductors, rechargeable batteries, rechargeable power sources, source management systems, loads, power transfer interfaces, power cables, input devices, electricity generators, electric motors, arrays of solar cells, hydrogen power units providing fuel cells, wind energy to electric energy converters, wave energy to electric energy converters, tidal energy to electric energy converters, water currents energy to electric energy converters, thermal energy to electric energy converters, flux alternators, magnetic levitation devices, or combinations thereof.

10. A method for providing a wind energy using a wind energy converter comprising one or more epicyclic blade rotors comprising one or more blades and a gear mean, said epicyclic blade rotors rotatably supported by a carrier and further comprising a circumferential drive mean, wherein said gear mean meshes with said circumferential drive mean and/or further comprising a sun drive mean, wherein said gear mean meshes with said sun drive mean, and wherein said gear mean can drive an electricity generatig mean, the method **characterised in that** it comprises the steps of:
- providing a torque by means of the epicyclic blade rotors to said gear mean;
- distribuing said torque to said circumferential drive mean and/or to said carrier and/or to said sun drive mean;
- driving one or more electricity generating means by means of said torque.

11. The method for providing a wind energy using a wind energy converter according to claim 10, wherein said gear mean and/or said carrier and/or said circumferential drive mean and/or said sun drive mean torque can be controlled.

12. The method for providing a wind energy using a wind energy converter according to claim 11, wherein at least one said control can be selected from the group consisting of electromagnetic, mechanical, pneumatic, hydraulic, or combinations thereof.
